# FASCICULE DE BREVET EUROPEEN

(11) **EP 3 713 983 B1**
(45) Date de publication et mention de la délivrance du brevet: **19.05.2021**
(21) Numéro de dépôt: 18819197.7
(22) Date de dépôt: 21.11.2018
(51) Int. Cl.: C08G 18/79, C08G 18/12, C08G 18/28, C09D 175/04, C08G 18/40, C09J 175/04, C08L 75/04

(54) **COMPOSITION A BASE DE POLYURETHANE**
POLYURETHANBASIERTE ZUSAMMENSETZUNG
POLYURETHANE-BASED COMPOSITION

(30) Priorité: 22.11.2017 FR 1761029
(43) Date de publication de la demande: 30.09.2020
(73) Titulaire: Bostik SA, 92700 Colombes (FR)
(72) Inventeur: MICHAUD, Guillaume, 60280 Venette (FR); SIMON, Frédéric, 60280 Venette (FR); FOUQUAY,Stéphane, 60280 Venette (FR)
(74) Mandataire: Arkema Patent
(86) Numéro de dépôt international: PCT/FR2018/052940
(87) Numéro de publication internationale: WO 2019/102142

(56) Documents cités:
- WO-A1-2015/140458
- US-A- 5 466 811
- US-A1- 2007 151 666

## Description

### DOMAINE DE L'INVENTION

La présente invention concerne une composition à base de polyuréthane.

L'invention concerne également une structure multicouche (ou complexe), utilisable notamment dans le domaine de l'emballage flexible, qui comprend au moins deux couches de matériau liées entre elles par une couche de la composition selon l'invention.

La présente invention concerne également un procédé de complexage adapté à la fabrication dudit complexe.

### ARRIERE-PLAN TECHNOLOGIQUE

Les emballages flexibles destinés au conditionnement des produits les plus divers, tels ceux fabriqués pour les industries agroalimentaire, cosmétique ou de la détergence, sont généralement constitués de plusieurs couches minces (sous forme de feuilles ou de films) dont l'épaisseur est comprise entre 5 et 150 µm et qui sont constituées de différents matériaux comme le papier, un métal (par exemple l'aluminium) ou encore par des polymères thermoplastiques. Le film complexe (ou multicouche) correspondant, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité atmosphérique ou à l'oxygène,
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation ou de stérilisation.

Pour constituer l'emballage final, le multicouche est généralement mis en forme par thermoscellage, à une température variant d'environ 120 à 250°C, cette dernière technique étant également utilisée pour la fermeture de l'emballage autour du produit destiné au consommateur.

Les diverses couches de matériau qui composent le multicouche sont combinées ou assemblées par contrecollage au cours de procédés industriels de complexage (également dénommés par le terme "lamination").

Ces procédés mettent en œuvre des adhésifs (ou colles) et des dispositifs (ou machines) conçus à cet effet. Le film multicouche ainsi obtenu est souvent lui-même qualifié par le terme "laminé".

Ces procédés comprennent tout d'abord une étape d'enduction de l'adhésif sur une première couche de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'une deuxième couche de matériau, identique ou différent du premier, consistant en l'application sous pression de cette deuxième couche de matériau sur la première couche de matériau recouvert de la couche de colle.

Les adhésifs à base de polyuréthane à terminaisons NCO sont couramment utilisés pour ce type d'application.

Toutefois, des compositions à base de polyuréthane à terminaisons NCO présentent en général l'inconvénient de comporter des teneurs résiduelles importantes en diisocyanate aromatique provenant de la réaction de synthèse du polyuréthane, susceptibles de conduire à un certain nombre d'inconvénients, notamment des problèmes de toxicité. En effet, le non-étiquetage des polyuréthanes nécessite des teneurs résiduelles en diisocyanate inférieures à 0,1% en poids. Afin d'obtenir des teneurs résiduelles aussi faibles, les procédés de production peuvent être contraignants. En outre, il a été observé que les compositions de polyuréthane possédant une teneur en monomère MDI (diisocyanate aromatique) inférieure ou égale à 1% en poids par rapport au poids de la composition de polyuréthane, sont hautement visqueuses à température ambiante et présentent des problèmes de stabilité dans le temps en termes de viscosité.

Le document US 2007/0151666 décrit une composition adhésive comprenant un premier constituant A à base d'un composé présentant au moins deux groupements cyclocarbonates et un deuxième constituant B à base d'un composé présentant au moins deux groupements amine primaire et/ou secondaire. Les compositions décrites dans ce document ne permettent pas d'obtenir une structure multicouche résistant à un traitement thermique à haute température, tel qu'une stérilisation. En particulier, il a été observé que la structure multicouche obtenue avec de telles compositions présente, après traitement thermique dans une autoclave, des signes de dégradation du joint adhésif (présence de boursouflures, bulles et/ou déréticulation du joint adhésif), rendant en particulier ledit multicouche impropre à la fabrication d'emballages flexibles destinés au conditionnement de produits.

Le but de la présente invention est de fournir une composition à base de polyuréthane présentant une meilleure tenue thermique, en particulier vis-à-vis du test de stérilisation.

Un autre but de la présente invention est de fournir une telle composition substantiellement voire totalement exempte de monomères polyiisocyanates résiduels, en particulier de type diisocyanate aromatique (composé où la fonction NCO est directement liée à un cycle aromatique).

### DESCRIPTION DE L'INVENTION

Dans la présente demande, en l'absence d'indication contraire :
- les quantités exprimées sous la forme de pourcentage correspondent à des pourcentages poids/poids ;
- l'indice hydroxyle d'un composé alcoolique représente le nombre de fonctions hydroxyles par gramme de produit, et est exprimé sous la forme du nombre équivalent de milligrammes de potasse (KOH) utilisés dans le dosage des fonctions hydroxyles, par gramme de produit ;
- l'alcalinité primaire représente le nombre de fonctions -NH₂ par gramme de produit, et est exprimé sous la forme du nombre de milliéquivalents de -NH₂ par gramme de produit. Il peut être mesuré par RMN ou par potentiométrie selon des méthodes bien connues de l'homme du métier ;
- l'alcalinité totale représente le nombre de fonctions aminées (de type amine primaire, secondaire et tertiaire) par gramme de produit, et est exprimé sous la forme de milliéquivalent de HCl par gramme de produit. L'alcalinité totale peut être déterminée par RMN ou dosage potentiométrique ;
- la mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn). La viscosité d'un produit est de préférence mesurée au moins 24 heures après fabrication dudit produit ;
- les masses moléculaires moyennes en nombre (Mn) des polyols sont calculées à partir de leurs indices d'hydroxyles et de leurs fonctionnalités ;
- les masses molaires des diamines (B1) sont calculées à partir de leurs alcalinités primaires et/ou totales, et de leur fonctionnalité ;
- les masses molaires (ou masses molaires moyennes en cas de mélange) des polyamines (B2) sont calculées à partir de leurs structures chimiques (RMN ¹H/¹³C) et de leurs alcalinités primaires et/ou secondaire et/ou tertiaires et/ou totales.

Un premier objet de la présente invention concerne une composition, de préférence adhésive, comprenant :
- une composition A comprenant au moins un polyuréthane comprenant au moins deux fonctions terminales T de formule (I) suivante : 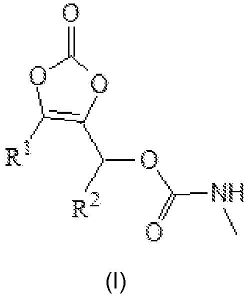
dans laquelle R¹ et R², identiques ou différents, représentent chacun un atome d'hydrogène, un groupe alkyle linéaire ou ramifié de préférence en C1-C6, un groupe cycloalkyle de préférence en C5-C6, un groupe phényle de préférence en C6-C12, ou un groupe alkylphényle avec une chaîne alkyle, linéaire ou ramifiée, de préférence en C1-C4 ; ou R¹ et R² peuvent être liés ensemble pour former un groupement -(CH₂)ₙ- avec n = 3, 4 ou 5,
et
- une composition B comprenant au moins une amine.

La composition selon l'invention présente avantageusement une meilleure tenue thermique, en particulier vis-à-vis du test de stérilisation.

La composition selon l'invention présente avantageusement une meilleure réactivité à moyenne et basse température, en particulier à une température inférieure ou égale à 60°C, et notamment entre 0°C et 60°C.

### Composition A

Le polyuréthane susmentionnée comprenant au moins deux fonctions terminales T peut représenter de 10% à 100% en poids de la composition A, de préférence de 20% à 95% en poids, plus préférentiellement de 30% à 90% en poids, et mieux encore de 40% à 80% en poids, par rapport au poids total de la composition A.

Le polyuréthane susmentionné comprenant au moins deux fonctions terminales T peut être obtenu par réaction d'un polyuréthane à terminaisons NCO et d'au moins un composé de formule (II) suivante : 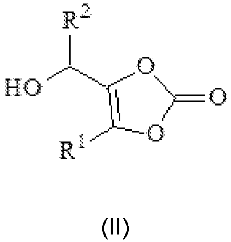 dans laquelle R¹ et R², identiques ou différents, représentent chacun un atome d'hydrogène, un groupe alkyle linéaire ou ramifié de préférence en C1-C6, un groupe cycloalkyle de préférence en C5-C6, un groupe phényle de préférence en C6-C12, ou un groupe alkylphényle avec une chaîne alkyle, linéaire ou ramifiée, de préférence en C1-C4 ; ou R¹ et R² peuvent être liés ensemble pour former un groupement -(CH₂-)n-avec n = 3, 4 ou 5.

Les composés de formule (II) peuvent être synthétisés tel que décrit dans EP0078413, par exemple selon le schéma suivant :

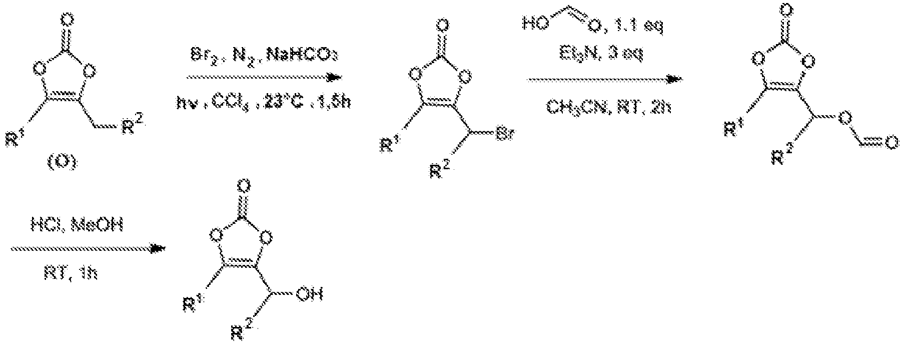

Le composé (O) susmentionné peut être synthétisé par les méthodes décrites dans Liebigs Annalen der Chemie, Vol. 764, pages 116-124 (1972), Tetrahedron Letters, 1972, pages 1701-1704 ou US 3,020,290.

Les composés de formule (II) peuvent également être préparés tel que décrit dans WO 96/02253.

Selon un mode de réalisation préféré les composés de formule (II) sont ceux répondant à la formule (II-1) suivante : 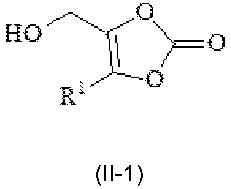 dans laquelle R¹ est tel que défini précédemment. Les composés de formule (II-1) sont des composés de formule (II) dans laquelle R² est un hydrogène.

Selon un mode de réalisation préféré, les composés de formule (II) ont la formule (II-1a) suivante :

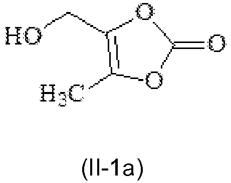

Le composé de formule (II-1a) est le 4-hydroxymethyl-5-méthyl-1,3-dioxolen-2-one.

Le composé de formule (II-1a) est un composé de formule (II) dans laquelle R² est un hydrogène, et R¹ est un méthyle. Le composé de formule (II-1a) peut être obtenu tel que décrit dans WO 96/02253, à savoir en particulier selon le schéma suivant :

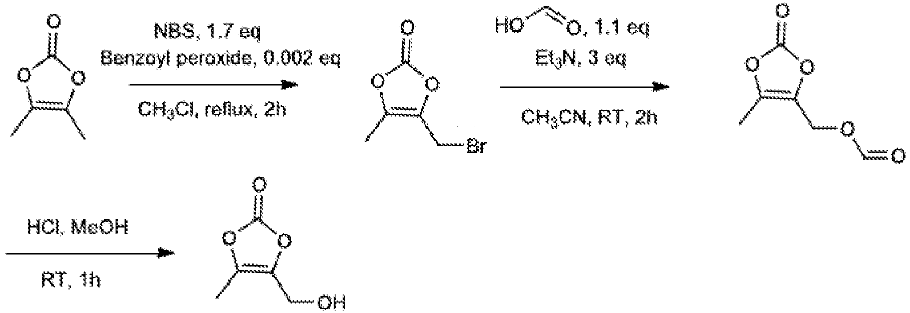

Selon un mode de réalisation, le polyuréthane susmentionné comprenant au moins deux fonctions terminales T est préparé par un procédé comprenant les étapes suivantes:
- E1) la préparation d'un polyuréthane à terminaisons NCO par une réaction de polyaddition :
   i) d'au moins un polyisocyanate de préférence choisi parmi les diisocyanates,les triisocyanates, et leurs mélanges ;
   ii) avec au moins un polyol de préférence choisi parmi les polyéther polyols, les polycarbonate polyols, les polyester polyols, et leurs mélanges ;
      dans des quantités telles que le rapport molaire NCO/OH (r1) est strictement supérieur à 1, de préférence va de 1,6 à 1,9, et préférentiellement de 1,65 à 1,85 ;
   et
- E2) la réaction du produit formé à l'issue de l'étape E1) avec au moins un composé de formule (II) tel que défini ci-dessus,
dans des quantités telles que le rapport molaire NCO/OH (r2) est inférieur ou égal à 1, de préférence compris entre 0,90 et 1, et préférentiellement compris entre 0,95 et 1.

Dans le cadre de l'invention, et sauf mention contraire, (r1) est le rapport molaire NCO/OH correspondant au rapport molaire du nombre de groupes isocyanates (NCO) sur le nombre de groupes hydroxyles (OH) portés par l'ensemble des polyisocyanate(s) et polyol(s) présents dans le milieu réactionnel de l'étape E1).

Dans le cadre de l'invention, et sauf mention contraire, (r2) est le rapport molaire NCO/OH correspondant au rapport molaire du nombre de groupes isocyanates sur le nombre de groupes hydroxyles portés respectivement par l'ensemble des isocyanate(s) (s'agissant notamment du polyuréthane à terminaisons NCO et éventuellement le(s) polyisocyanate(s) non réagi(s) à l'issue de l'étape E1)), et alcool(s) présents dans le milieu réactionnel de l'étape E2).

Lorsque le polyuréthane à terminaisons NCO est obtenu lors de l'étape E1) à partir d'un mélange de polyisocyanates ou de plusieurs polyisocyanates ajoutés successivement, le calcul du rapport (r1) tient compte d'une part des groupes NCO portés par l'ensemble des polyisocyanates présents dans le milieu réactionnel de l'étape E1), et d'autre part des groupes OH portés par le(s) polyol(s) présent(s) dans le milieu réactionnel de l'étape E1).

Lors de l'étape E1), la réaction de polyaddition est mise en oeuvre à une température de préférence inférieure à 95°C, et dans des conditions de préférence anhydres.

### Etape E1)

### Polyol(s)

Le(s) polyol(s) utilisable(s) pour préparer le polyuréthane à terminaisons NCO utilisé selon l'invention peu(ven)t être choisi(s) parmi ceux dont la masse moléculaire moyenne en nombre (Mn) va de 300 à 12 000 g/mol, de préférence de 400 à 4 000 g/mol, et préférentiellement de 500 à 2 000 g/mol.

De préférence, leur fonctionnalité hydroxyle va de 2 à 3. La fonctionnalité hydroxyle est le nombre moyen de fonction hydroxyle par mole de polyol.

De préférence, le(s) polyol(s) utilisable(s) selon l'invention présente(nt) un indice hydroxyle (IOH) (moyen) allant de 9 à 570 milligrammes de KOH par gramme de polyol (mg KOH/g), de préférence de 35 à 430 mg KOH/g, de préférence encore de 55 à 340 mg KOH/g. Selon un mode de réalisation particulier, l'indice hydroxyle de polyol(s) présentant une fonctionnalité hydroxyle de 2 va de 20 à 380 mg KOH/g, de préférence de 35 à 290 mg KOH/g, de préférence encore de 50 à 230 mg KOH/g. Selon un mode de réalisation, l'indice hydroxyle de polyol(s) présentant une fonctionnalité hydroxyle de 3 va de 40 à 570 mg KOH/g, de préférence de 55 à 430 mg KOH/g, de préférence encore de 80 à 340 mg KOH/g.

Le ou les polyols peuvent être choisis parmi les polyéther polyols, les polyester polyols, les polycarbonate polyols et leurs mélanges. De préférence, l'étape (E1) est réalisée avec un mélange de polyéther polyols et de polyester polyols.

Le(s) polyéther polyol(s) utilisable(s) selon l'invention est (sont) de préférence choisi(s) parmi les polyoxyalkylène-polyol, dont la partie alkylène, linéaire ou ramifiée, comprend de 2 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène-diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse moléculaire moyenne en nombre (Mn) allant de 300 à 12 000 g/mol ;
- les polyoxyéthylène diols ou triols (aussi désignés par polyéthylène glycol (PEG) diols ou triols) ayant une masse moléculaire moyenne en nombre (Mn) allant de 300 à 12 000 g/mol;
- et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination VORANOL® P 400 par la société DOW de masse moléculaire moyenne en nombre (Mn) voisine de 400 g/mol et dont l'indice hydroxyle va de 250 à 270 mg KOH/g.

A titre d'exemple de polyéther triol, on peut citer le polyoxypropylène triol commercialisé sous la dénomination VORANOL® CP 450 » par la société DOW, de masse moléculaire moyenne en nombre (Mn) voisine de 450 g/mol et dont l'indice hydroxyle va de 370 à 396 mg KOH/g.

Les polyester polyols peuvent être choisis parmi les polyester diols et les polyester triols, et de préférence parmi les polyester diols.

A titre d'exemple de polyester diol, on peut citer le REALKYD® XTR 10410» commercialisé par la société CRAY VALLEY de masse moléculaire moyenne en nombre (Mn) voisine de 1000 g/mol et dont l'indice hydroxyle va de 108 à 116 mg KOH/g. Il s'agit d'un produit issu de la condensation d'acide adipique, de diéthylèneglycol et de monoéthylèneglycol.

Les polycarbonate polyols peuvent être choisis parmi les polycarbonate diols ou triols, ayant en particulier une masse moléculaire moyenne en nombre (Mₙ) allant de 300 g/mol à 12 000 g/mol.

A titre d'exemple de polycarbonate diol, on peut citer :
- le CONVERGE POLYOL 212-10 et CONVERGE POLYOL 212-20 commercialisés par la société NOVOMER respectivement de masse moléculaire en nombre (Mₙ) égales à 1 000 et 2 000 g/mol dont les indices hydroxyles sont respectivement de 112 et 56 mg KOH/g,
- le DESMOPHEN® C XP 2716 commercialisé par COVESTRO de masse moléculaire en nombre (Mₙ) égale à 326 g/mol et dont l'indice hydroxyle est de 344 mg KOH/g,
- les POLYOL C-590, C1090, C-2090 et C-3090 commercialisés par KURARAY ayant une masse moléculaire en nombre (Mₙ) allant de 500 à 3 000 g/mol et un indice hydroxyle allant de 224 à 37 mg KOH/g.

Selon un mode de réalisation, l'étape E1) est réalisée en présence d'un mélange de polyols, et en particulier un mélange de polyéther diol, de polyéther triol et de polyester diol.

### Polyisocyanate(s)

Le(s) polyisocyanate(s) utilisable(s) pour préparer le polyuréthane utilisé selon l'invention peuvent être ajoutés séquentiellement ou mis à réagir sous la forme de mélange.

Le(s) diisocyanate(s) utilisable(s) lors de l'étape E1) peu(ven)t être de formule OCN-R³-NCO où R³ représente un radical divalent alkylène linéaire, ramifié ou cyclique comprenant de 5 à 140 atomes de carbone, de préférence de 6 à 70 atomes de carbone, de préférence encore de 7 à 40 atomes de carbone, encore plus préférentiellement de 8 à 24 atomes de carbone.

Selon un mode de réalisation, R³ est choisi parmi l'un des radicaux divalents suivants dont les formules ci-dessous font apparaître les 2 valences libres :
a) le radical divalent dérivé de l'isophorone : 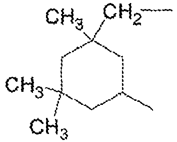
b) le radical dérivé 4,4'-HMDI : 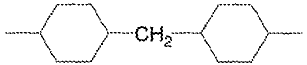
c) le radical divalent dérivé du TDI ;
d) le radical divalent dérivé du MDI:
e) le radical divalent -(CH₂)₆- (ou radical hexaméthylène), qui est dérivé de l'hexadiméthylène diisocyanate (HDI)
f) le radical divalent dérivé du xylylène diisocyanate ;
g) le radical divalent dérivé du 1,3-bis(isocyanatométhyl)cyclohexane (m-H6XDI) : 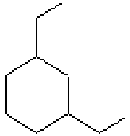
h) le radical divalent dérivé du 4,4'-Méthylene dicyclohexyl diisocyanate (H12MDI) : 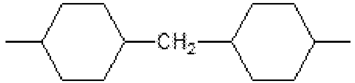
i) le radical divalent dérivé du tétraméthylxylylène diisocyanate (tel que le m-TMXDI) : 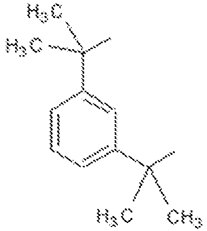
j) le radical divalent dérivé d'un allophanate issu d'un diisocyanate de formule NCO-R³-NCO, tel que par exemple le radical divalent dérivé d'un allophanate de HDI de formule (Y) suivante : 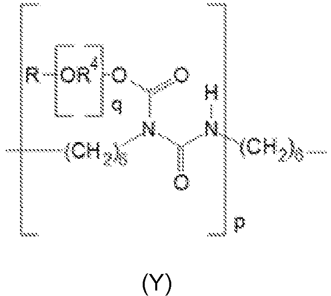 dans laquelle :
   - p est un nombre entier allant de 1 à 2 ;
   - q est un nombre entier allant de 0 à 9, et de préférence 2 à 5 ;
   - R représente une chaine hydrocarbonée, saturée ou insaturée, cyclique ou acyclique, linéaire ou ramifiée, comprenant de 1 à 20 atomes de carbone, de préférence de 6 à 14 atomes de carbone ;
   - R⁴ représente un groupe divalent alkylène, linéaire ou ramifié, ayant de 2 à 4 atomes de carbones, et de préférence un groupe divalent propylène ;

Selon un mode de réalisation, R³ est choisi parmi l'un des radicaux divalents suivants dont les formules ci-dessous font apparaître les 2 valences libres :
b) le radical divalent dérivé de l'isophorone : 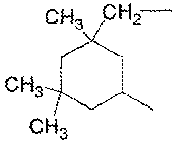
b) le radical dérivé 4,4'-HMDI : 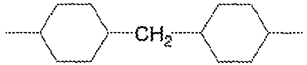
c) le radical divalent dérivé du 2,4-TDI ou du 2,6-TDI : 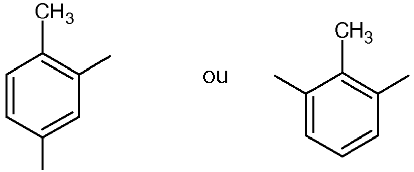
d) le radical divalent dérivé du 2,4'-MDI ou du 4,4'-MDI : 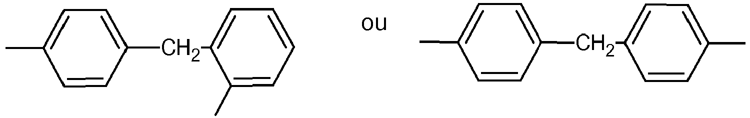
e) le radical divalent -(CH₂)₆- (ou radical hexaméthylène), qui est dérivé de l'hexadiméthylène diisocyanate (HDI)
f) le radical divalent dérivé du xylylène diisocyanate (tel que le m-XDI) : 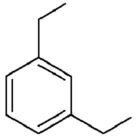
g) le radical divalent dérivé du 1,3-bis(isocyanatométhyl)cyclohexane (m-H6XDI) : 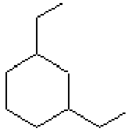
h) le radical divalent dérivé du 4,4'-Méthylene dicyclohexyl diisocyanate (H12MDI) : 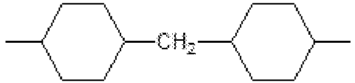
i) le radical divalent dérivé du tétraméthylxylylène diisocyanate (tel que le m-TMXDI) : 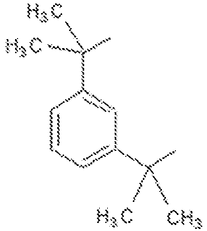
j) le radical divalent dérivé d'un allophanate issu d'un diisocyanate de formule NCO-R³-NCO, tel que par exemple le radical divalent dérivé d'un allophanate de HDI de formule (Y) suivante : 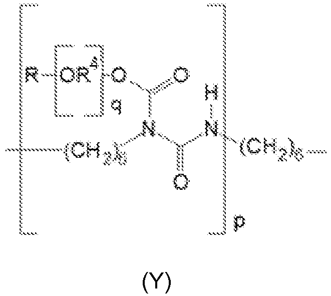 dans laquelle :
   - p est un nombre entier allant de 1 à 2 ;
   - q est un nombre entier allant de 0 à 9, et de préférence 2 à 5 ;
   - R représente une chaine hydrocarbonée, saturée ou insaturée, cyclique ou acyclique, linéaire ou ramifiée, comprenant de 1 à 20 atomes de carbone, de préférence de 6 à 14 atomes de carbone ;
   - R⁴ représente un groupe divalent alkylène, linéaire ou ramifié, ayant de 2 à 4 atomes de carbones, et de préférence un groupe divalent propylène ;

De préférence, p, q, R et R⁴ sont choisis tel que le dérivé d'allophanate de HDI ci-dessus comprend une teneur en groupe isocyanate NCO allant de 12 à 14% en poids par rapport au poids dudit dérivé.

Le(s) triisocyanate(s) utilisable(s) selon l'invention peu(ven)t être choisi(s) parmi les isocyanurates, les biurets, et les adduits de diisocyanates et de triols.

En particulier, le(s) isocyanurate(s) peuvent être utilisé(s) sous la forme d'un mélange technique de (poly)isocyanurate(s) de pureté supérieure ou égale à 70% en poids isocyanurate(s).

De préférence, le(s) isocyanurate(s) de diisocyanate utilisable(s) selon l'invention répond(ent) à la formule générale (W) suivante : 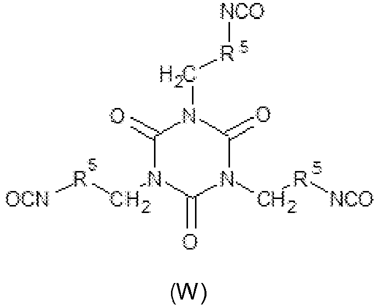
dans laquelle R⁵ représente un groupe alkylène, linéaire, ramifié ou cyclique, aliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) : 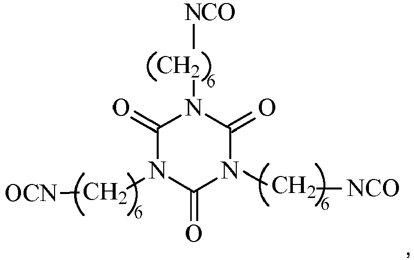
- le trimère isocyanurate d'isophorone diisocyanate (IPDI) : 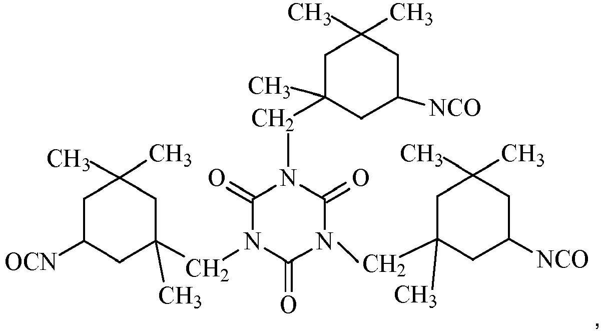
- le trimère isocyanurate de pentaméthylène diisocyanate (PDI) : 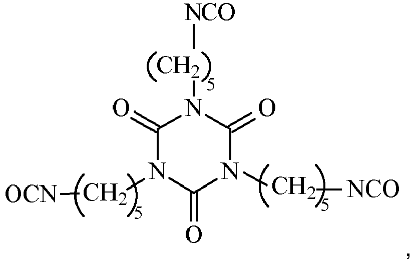
- le trimère isocyanurate du méta-xylylène diisocyanate (m-XDI) : 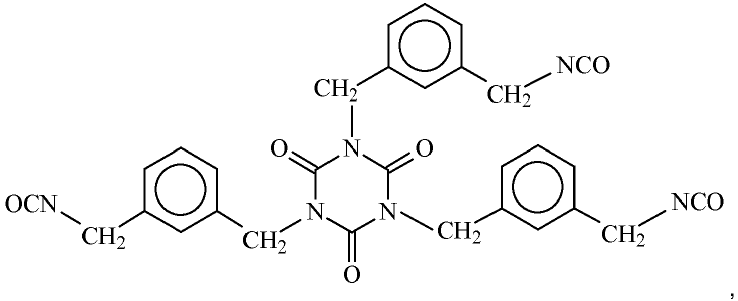
- le trimère isocyanurate du m-XDI, sous forme hydrogénée :

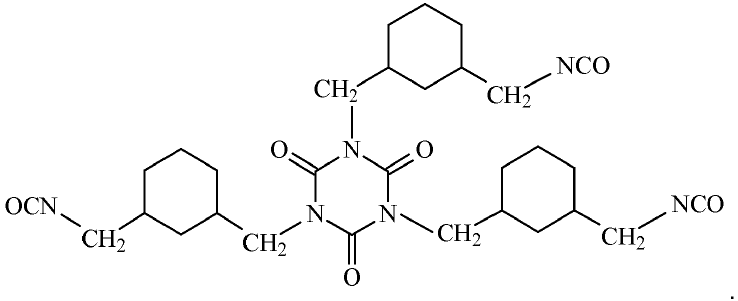

A titre d'exemple d'adduits de diisocyanates et de triols utilisables selon l'invention, on peut citer l'adduit de méta xylylène diisocyanate et de triméthylolpropane, tel que représenté ci-dessous. Cet adduit est commercialisé par exemple par la société MITSUI CHEMICAL, Inc sous la dénomination TAKENATE® D-110N.

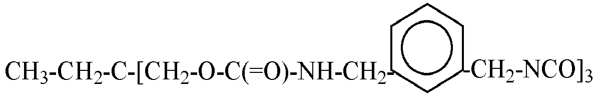

Le(s) polyisocyanate(s) utilisable(s) pour préparer le polyuréthane utilisé selon l'invention sont typiquement largement disponibles dans le commerce. A titre d'exemple, on peut citer le SCURANATE® TX commercialisé par la société VENCOREX, correspondant à un 2,4-TDI de pureté de l'ordre de 95%, le SCURANATE® T100 commercialisé par la société VENCOREX, correspondant à un 2,4-TDI de pureté supérieure à 99% en poids, le DESMODUR® I » commercialisé par la société COVESTRO, correspondant à un IPDI ou encore le DESMODUR® N3300 » commercialisé par la société COVESTRO, correspondant à un isocyanurate de HDI, le « TAKENATE ™ 500 » commercialisé par MITSUI CHEMICALS correspondant à un m-XDI, le « TAKENATE ™ 600 » commercialisé par MITSUI CHEMICALS correspondant à un m-H6XDI, le « VESTANAT® H12MDI » commercialisé par EVONIK correspondant à un H12MDI.

De préférence, le(s) polyisocyanate(s) est(sont) choisi(s) parmi le trimère isocyanurate d'hexaméthylène diisocyanate, le trimère isocyanurate de pentaméthylène diisocyanate, l'isophorone diisocyanate (IPDI), le toluène diisocyanate (TDI), le Xylylène diisocyanate (XDI), et leurs mélanges.

La réaction de polyaddition de l'étape E1) peut être mise en oeuvre en présence ou non d'au moins un catalyseur de réaction.

Le(s) catalyseur(s) de réaction utilisable(s) au cours de la réaction de polyaddition de l'étape E1) peu(ven)t être tout catalyseur connu de l'homme du métier pour catalyser la formation de polyuréthane par réaction d'au moins un polyisocyanate avec au moins un polyol.

Une quantité allant jusque 0,3% en poids de catalyseur(s) par rapport au poids du milieu réactionnel de l'étape E1) peut être utilisée. En particulier, on préfère utiliser de 0,02 à 0,2% en poids de catalyseur(s) par rapport au poids total du milieu réactionnel de l'étape E1).

### Etape E2)

Selon un mode de réalisation, l'étape E2) est mise en oeuvre à une température inférieure à 95°C, et dans des conditions de préférence anhydres.

L'étape E2) peut être réalisée avec un composé de formule (II) ou avec un mélange de composés de formule (II) de nature différente.

Le(s) composé(s) de formule (II) susmentionnée peut(vent) être mis en oeuvre soit pur, soit sous la forme d'un mélange ou une composition contenant de préférence au moins 90% en poids de composé(s) de formule (II).

L'étape E2) peut être réalisée avec un mélange de composés de formule (II) de natures différentes (par exemple avec des R¹ différents, ou bien des R² différents, ou alors avec des R¹ et R² différents).

A titre d'exemple de composé de formule (II), on peut citer le 4-hydroxyméthyl-5-méthyl-1,3-dioxolen-2-one disponible chez FLUOROCHEM et OXCHEM ayant une masse molaire de 130,1 g/mol et un indice hydroxyle voisin de 431 mg KOH/g.

Le calcul du rapport (r2) tient notamment compte d'une part des groupes NCO portés par l'ensemble des isocyanates présents dans le milieu réactionnel lors de l'étape E2 (polyuréthane à terminaisons NCO et éventuellement les polyisocyanates non réagis ayant servis à sa synthèse issus de l'étape E1) et d'autre part des groupes OH portés par le(s) composé(s) de formule (II), et éventuellement le(s) alcool(s) résiduel(s) utilisé(s) dans l'étape E1).

La composition A peut comprendre en outre au moins un solvant, de préférence en une quantité allant de 10% à 50% en poids, plus préférentiellement allant de 15% à 40% en poids, et mieux encore allant de 20 à 30% en poids, par rapport au poids total de la composition A.

Le solvant peut être choisi parmi les solvants organiques et alcooliques tels que l'acétate d'éthyle, la méthyl éthyl cétone, le xylène, l'éthanol, l'isopropanol, le tétrahydrofurane, le méthyl-tétrahydrofurane, ou encore parmi ISANE® (à base d'isoparaffines, disponible auprès de la société TOTAL) ou EXXOL® D80 (à base d'hydrocarbures aliphatiques, disponible auprès de la société EXXONMOBIL CHEMICAL).

Selon un mode de réalisation, la composition A possède une viscosité mesurée à température ambiante (23°C) allant de 500 à 10000 mPa.s, de préférence allant de 1000 à 5000 mPa.s.

Selon un mode de réalisation, le polyuréthane comprenant au moins deux fonctions terminales T susmentionnées, a la formule (III) suivante : 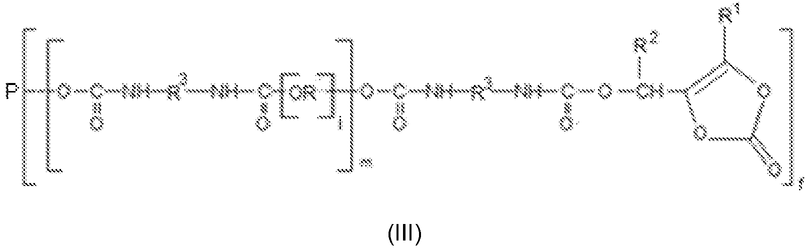 dans laquelle :
▪ R¹ et R² sont tels que définis ci-dessus, R¹ étant de préférence un méthyle et R² étant de préférence un atome d'hydrogène ;
▪ P représente l'une des deux formules ci-dessous : 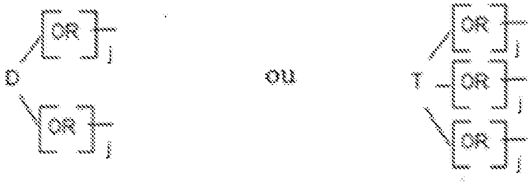 dans lesquelles D et T représentent, indépendamment l'un de l'autre, un radical hydrocarboné comprenant de 2 à 66 atomes de carbone, linéaire ou ramifié, cyclique, alicyclique ou aromatique, saturé ou insaturé, comprenant éventuellement un ou plusieurs hétéroatomes ;
▪ R³ étant tel que défini précédemment, et représentant de préférence un radical divalent alkylène linéaire ou ramifié comprenant de 1 à 13 atomes de carbone, de préférence de 6 à 13 atomes de carbone ;
▪ R représente un radical divalent alkylène linéaire ou ramifié comprenant de 2 à 4 atomes de carbone, préférentiellement de type propylène ;
▪ i est un nombre entier tel que la masse moléculaire du bloc de formule -[OR]ᵢ- va de 300 à 12 000 g/mol ;
▪ j est un nombre entier tel que la masse moléculaire moyenne du bloc polyéther de formule -[OR]ⱼ- va de 100 g/mol à 2 000 g/mol ;
▪ m et f sont des nombres entiers tel que la masse moléculaire moyenne du polymère va de 600 à 100 000 g/mol ;
▪ f est égal à 2 ou 3.

Le polyuréthane selon l'invention présente de préférence de 0,1 à 1,5 milliéquivalent de fonctions T de formule (I) susmentionnée par gramme dudit polyuréthane, plus préférentiellement de 0,5 à 1,2 milliéquivalent de fonctions T par gramme dudit polyuréthane, et avantageusement de 0,5 à 1 milliéquivalent de fonctions T par gramme dudit polyuréthane.

### Composition B

La composition B comprend au moins une amine.

L'amine peut être une amine comprenant au moins une fonction amine primaire et/ou au moins une fonction amine secondaire.

De préférence, l'amine de la composition B est une diamine B1 et/ou une polyamine B2.

Dans le cadre de l'invention, et sauf mention contraire, on entend par « diamine », un composé comprenant deux fonctions amine.

La diamine B1 peut comprendre deux fonctions amine primaire, ou deux fonctions amine secondaire, ou une fonction amine primaire et une fonction amine secondaire. De préférence, la diamine B1 comprend deux fonctions amine primaire.

Dans le cadre de l'invention, et sauf mention contraire, on entend par « polyamine », un composé comprenant au moins deux fonctions amine, de préférence au moins trois fonctions amine.

La polyamine B2 peut comprendre aux moins deux fonctions amine primaire, ou au moins deux fonctions amine secondaire, ou au moins une fonction amine primaire et au moins une fonction amine secondaire. De préférence, la polyamine B2 comprend deux fonctions amine primaire.

Selon un mode de réalisation, la composition B comprend :
- au moins une diamine B1 comprenant de préférence deux groupements - CH₂-NH₂, et
- au moins une polyamine B2 comprenant de préférence au moins trois groupements -CH₂-NH₂,
composition B dans laquelle le ratio massique diamine B1 / polyamine B2 va de préférence de 30/70 à 70/30.

De préférence, la diamine B1 répond à l'une des formules (IV) ou (V) suivantes : 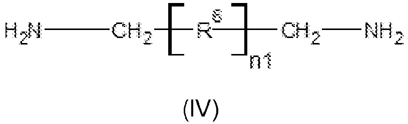 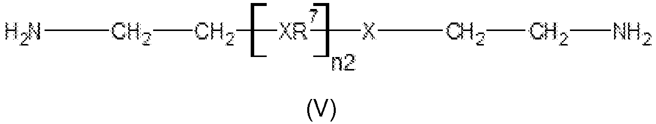 dans lesquelles :
- R⁶ est un radical divalent alkylène linéaire ou ramifié, alicyclique ou aromatique, tel que la masse molaire de la diamine B1 va de 100 à 600 g/mole ;
- R⁷ représente un radical divalent alkylène linéaire ou ramifié comprenant de 2 à 4 atomes de carbone, préférentiellement de type éthylène et/ou propylène, avec X = O, S, NH ou NR⁸ dans lequel R⁸ est un groupe alkyle linéaire ou ramifié, saturé ou insaturé, en C₁-C₂₀.
- n1 et n2 sont des nombres entiers tels que la masse molaire de la diamine B1 va de 100 à 600 g/mole.

A titre d'exemple de diamines B1, on peut citer la diéthylènetriamine (DETA) répondant à la formule : H₂N-CH₂-CH₂-NH-CH₂-CH₂-NH₂ ayant une alcalinité primaire de 19,39 méq/g, la 1,10-décanediamine H₂N-(CH₂)₁₀-NH₂ ayant une alcalinité primaire de 11,61 méq/g, ou encore la polyétherdiamine de formule: H₂N-CH₂-CH₂-O-CH₂-CH₂-O-CH₂-CH₂-NH₂ ayant une alcalinité primaire de 13,49 méq/g (disponible par exemple sous la dénomination commerciale JEFFAMINE® ED 148 auprès de la société HUNTSMAN).

D'autres exemples de diamines B1 qui peuvent être utilisés sont les amines grasses dimères comportant deux groupes amine primaire d'alcalinité primaire allant de 3,39 méq/g à 3,70 méq/g. Ces amines grasses dimères peuvent être obtenues à partir d'acides gras dimérisés correspondants. A titre d'exemple de telles amines grasses dimères, on peut citer la PRIAMINE® 1071 (disponible auprès de la société CRODA) ou celles répondant aux formules suivantes :

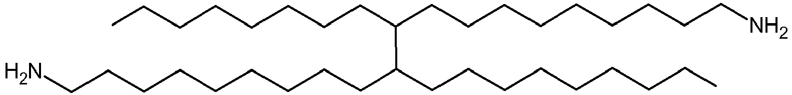

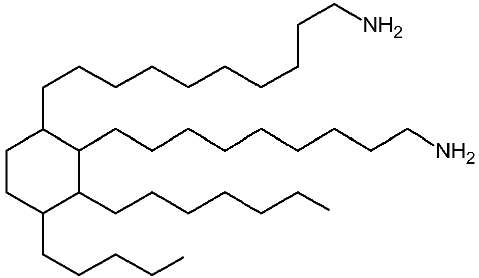

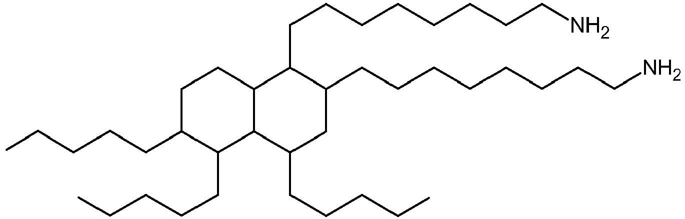

Les acides gras dimères utilisés pour préparer les amines grasses suscitées sont obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en C18 ayant une ou deux doubles liaisons (respectivement l'acide oléïque ou linoléïque) obtenus à partir de tallol qui est un sous-produit de la fabrication de la pâte à papier. Après polymérisation de ces acides gras insaturés, on obtient un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ. Par purification de ce mélange, on obtient les différents grades commerciaux d'acides dimères, monomères ou trimères. Ces acides gras dimères sont ensuite soumis à une réaction d'ammoniation réductrice (NH₃/H₂) en présence d'un catalyseur, permettant d'obtenir les amines grasses dimérisées.

Selon un mode de réalisation, la diamine B1 présente une masse molaire moyenne allant de 100 à 650 g/mole.

Selon un mode de réalisation de l'invention, la diamine B1 ou le mélange de diamines B1 présente une alcalinité primaire allant de 3,00 à 20,00 méq NH₂/g, de préférence de 9,00 à 15,00 méq/g.

Selon un mode de réalisation, la polyamine B2 comprend au moins trois groupements -CH₂-NH₂, de préférence au moins quatre groupements -CH₂-NH₂.

Selon un mode de réalisation, la polyamine B2 est choisie dans le groupe constitué des polyéthylèneimines (PEI), des polyéthylèneimines dendrimères, des polypropylèneimines (PPI), des polypropylèneimines dendrimères, des poly(propylène-éthylène)imines, des polyallylamines, de la tris(aminoethyl)amine (TAEA), de la tris(aminopropyl)amine (TAPA), et de leurs mélanges. De préférence, la polyamine B2 est choisie parmi les polyéthylèneimines (PEI), les poly(éthylène-propylène)imines, et leurs mélanges.

La polyamine B2 peut être choisie parmi les composés de formules (VI) à (XVII) suivantes : 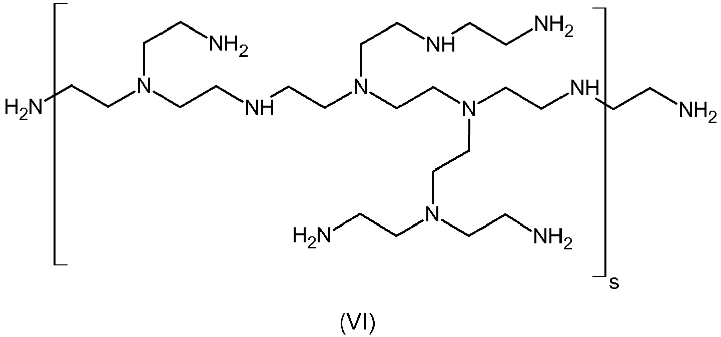 où s est un nombre entier, tel que la masse molaire moyenne va de 130 à 1800 g/mol, de préférence va de 140 à 1700 g/mol ; 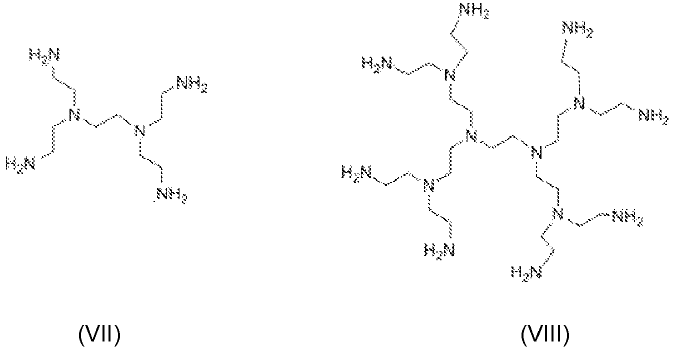 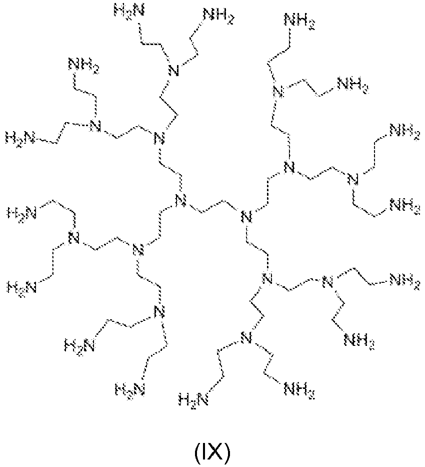 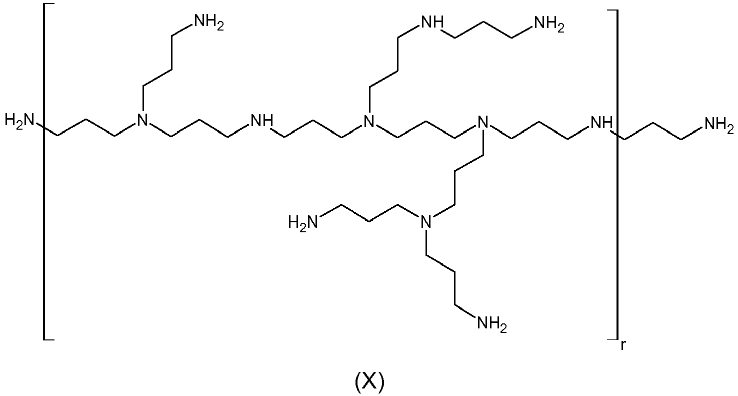 où r est un nombre entier, tel que la masse molaire moyenne en nombre va de 130 à 1800 g/mol, de préférence va de 140 à 1700 g/mol ; 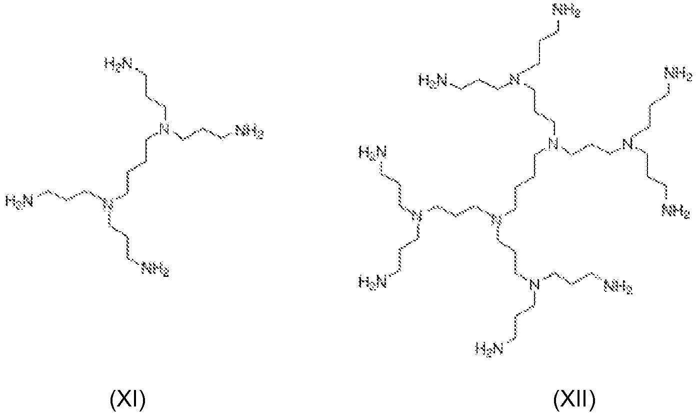 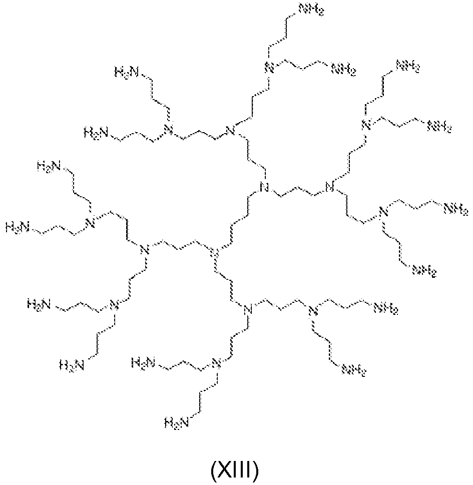 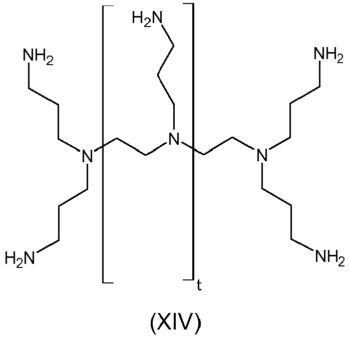 où t est un nombre entier, tel que la masse molaire moyenne en nombre va de 130 à 1800 g/mol, de préférence va de 140 à 1700 g/mol; 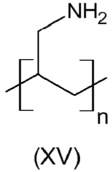 où n est un nombre entier allant de 3 à 20 ;

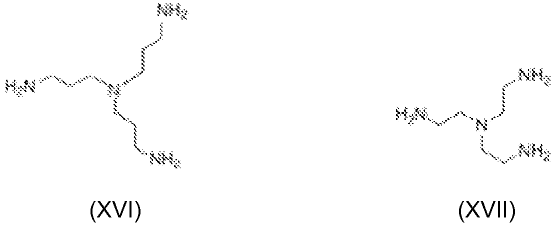

Selon un mode de réalisation, la polyamine ou le mélange de polyamines B2 a une alcalinité primaire allant de 8,00 à 21,00 méq/g, de préférence allant de 9,00 à 18,00 méq/g.

Selon un mode de réalisation de l'invention, la polyamine B2 présente une masse molaire moyenne en nombre allant de 130 à 1800 g/mol, de préférence allant de 140 à 1700 g/mol.

Selon un mode de réalisation préféré, la composition B comprend une diamine B1 de formule (IV) ou (V) telles que définies précédemment, et une polyamine B2 de formule (VI) telle que définie précédemment, en particulier dans un ratio massique B1/B2 = 50/50.

Selon un mode de réalisation, la composition B présente un rapport alcalinité primaire/alcalinité totale allant de 0,25 à 0,70.

De préférence, le ratio massique diamine B1 / polyamine B2 dans la composition B va de 30/70 à 70/30, préférentiellement de 40/60 à 60/40, et il est en particulier d'environ 50/50.

La composition B peut être préparée par simple mélange des constituants, de préférence à une température allant de 10°C à 50°C, de préférence à température ambiante, de préférence à l'aide d'un mélangeur mécanique.

### Composition

Selon un mode de réalisation de l'invention, le ratio molaire NH₂/T (r3) au sein de la composition va de 0,8 à 1,2, de préférence de 0,9 à 1,1, voire est d'environ 1,0, avec T étant telle que définie précédemment :

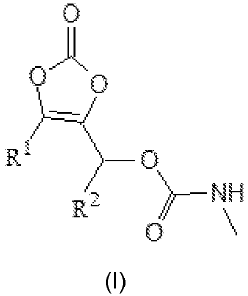

Dans le cadre de l'invention, et sauf mention contraire, (r3) est le rapport molaire NH₂/T correspondant au rapport molaire du nombre de groupes amine NH₂ sur le nombre de groupes T portés par l'ensemble des amine(s) et polyuréthane(s) à terminaisons T présents dans la composition.

Selon un mode de réalisation de l'invention, le ratio massique entre la composition A et la composition B, au sein de la composition, va de 100/3 à 100/50, de préférence de 100/3 à 100/30.

La composition, de préférence adhésive, selon l'invention peut comprendre au moins un catalyseur de réticulation. Le catalyseur de réticulation peut être présent dans la composition A et/ou dans la composition B, de préférence dans la composition A.

Le(s) catalyseur(s) de réticulation peu(ven)t être n'importe quel catalyseur habituellement utilisé(s) pour accélérer la réaction d'ouverture de cycle d'un composé comportant une fonction de formule (I) par une amine primaire.

A titre d'exemple de catalyseur de réticulation utilisable selon l'invention, on peut citer :
- les alcoolates, tels que le ter-butylate de potassium ou le méthanolate de sodium ;
- les bases fortes choisis parmi :
   ∘ les phosphazènes tel que le 2-tert-butylimino-2-diéthylamino-1,3-diméthylperhydro-1,3,2-diazaphosphorure (BMEP),
   ∘ les guanidines telles que :
      le 1,5,7-triazabicyclo[4.4.0]dec-5-ene (TBD) : 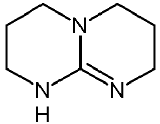
      le N-méthyl triazabicyclodécène (Me-TBD) : 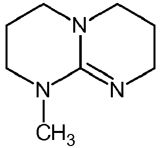
   ∘ des amines tertiaires telles que :
      le 1,8-diazabicyclo[5.4.0]undec-7-ène (DBU) : 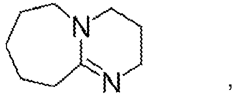
      le 1,5-diazabicyclo[4.3.0]non-5-ène (DBN) : 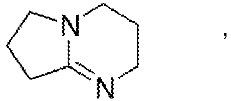
      l'éther diéthylique-2,2'-morpholine (DMDEE) : 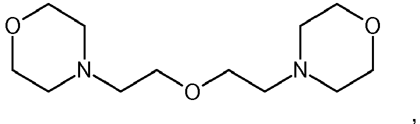
      le 1,4-diazabicyclo[2.2.2]octane (DABCO) :

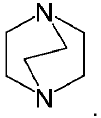

Une quantité allant de 0,03 à 3% en poids voire de 0,05 à 1% en poids, de catalyseur(s) de réticulation par rapport au poids total de la composition selon l'invention peut être utilisée.

Le(s) catalyseur(s) de réticulation peu(ven)t être réparti(s) dans une ou plusieurs des compositions (par exemple dans la composition A et/ou dans la composition B définies ci-dessus) formant la composition selon l'invention.

La composition, de préférence adhésive, selon l'invention peut comprendre en outre au moins une charge minérale, de préférence en une quantité ne dépassant pas 70% en poids du poids de ladite composition. La ou les charges peut/peuvent être présente(s) dans la composition A et/ou dans la composition B.

La (ou les) charge(s) minérale(s) utilisable(s) est (sont) préférentiellement choisie(s) de manière à améliorer les performances mécaniques de la composition selon l'invention à l'état réticulée.

A titre d'exemple de charge(s) utilisable(s), on peut citer de manière non limitative le carbonate de calcium, le kaolin, la silice, le gypse, les microsphères et les argiles.

De préférence, la (ou les) charge(s) minérale(s) possède(nt) une taille de particule maximale, notamment un diamètre externe, inférieur(e) à 100 µm et de préférence inférieur(e) à 10 µm. De telles charges peuvent être sélectionnées de manière bien connue par l'homme du métier en utilisant des tamis de mailles appropriées.

La composition, de préférence adhésive, selon l'invention peut en outre comprendre au moins un promoteur d'adhésion, de préférence choisi parmi les silanes, les aminosilanes ou les acryloyl silanes. Le ou les promoteurs d'adhésion peut/peuvent être présente(s) dans la composition A et/ou dans la composition B, de préférence dans la composition A.

La composition, de préférence adhésive, selon l'invention peut inclure jusqu'à 2% en poids d'un ou plusieurs autres additifs choisis de manière appropriée pour ne pas détériorer les propriétés de la composition adhésive selon l'invention à l'état réticulé. On peut par exemple citer parmi les additifs utilisables des antioxydants ou stabilisants UV (ultra-violet), des pigments, et des colorants. Ces additifs sont de préférence choisis parmi ceux habituellement utilisés dans des compositions adhésives.

Le(s) autres additif(s) peu(ven)t être répartie(s) dans un ou plusieurs des compositions formant la composition selon l'invention.

### Kit prêt à l'emploi

La présente invention concerne également un kit prêt à l'emploi, comprenant la composition A telle que définie ci-dessus d'une part et la composition B telle que définie ci-dessus d'autre part, conditionnées dans deux compartiments séparés.

En effet, la composition, de préférence adhésive, selon l'invention peut se trouver sous une forme bi-composants, par exemple au sein d'un kit prêt à l'emploi, comprenant la composition A d'une part dans un premier compartiment ou fût et la composition B d'autre part dans un second compartiment ou fût, dans des proportions adaptées pour un mélange direct des deux compositions, par exemple à l'aide d'une pompe doseuse.

Selon un mode de réalisation de l'invention, le kit comprend en outre un ou plusieurs moyens permettant le mélange des deux compositions A et B. De préférence, les moyens de mélange sont choisis parmi des pompes doseuses, des mélangeurs statiques de diamètre adapté aux quantités utilisées.

### Structure multicouche (complexe)

La présente invention a également pour objet une structure multicouche (complexe) comprenant au moins deux couches de matériau liées entre elles par une couche adhésive, caractérisé en ce que ladite couche adhésive est constituée par la composition, de préférence adhésive, selon l'invention, à l'état réticulé.

La couche adhésive présente de préférence une épaisseur allant de 1,2 à 5 µm.

La couche adhésive est obtenue par réticulation de la composition selon l'invention, à raison d'une quantité de préférence allant de 1,2 à 5 g/m².

Les matériaux dont sont constituées les couches de matériau entourant la couche adhésive sont généralement choisis parmi le papier, un métal, comme par exemple l'aluminium ou les polymères thermoplastiques tels que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère ou copolymère d'acide lactique (PLA), ou
- un polyhydroxyalkanoate (PHA).

Une couche individuelle de matériau peut être elle-même constituée de plusieurs matériaux. Il peut s'agir par exemple d'une couche de polymères thermoplastiques obtenue par coextrusion de deux polymères (il n'y alors pas de colle entre les couches coextrudées), les couches individuelles de polymère thermoplastique peuvent être en outre enduites d'une substance (par exemple à base d'oxyde d'aluminium ou d'oxyde de silicium) ou métallisée (cas du PET métallisé avec des particules d'aluminium) pour ajouter un effet barrière supplémentaire.

L'épaisseur des 2 couches de matériau adjacentes à la couche adhésive et des autres couches de matériau mises en œuvre dans la structure multicouche selon l'invention est susceptible de varier dans un large domaine allant par exemple de 5 à 150 µm. L'épaisseur totale de ladite structure est susceptible de varier également dans un large domaine allant par exemple de 20 à 400 µm.

De préférence, la structure multicouche se présente sous la forme d'un film multicouche.

### Procédé de complexage

L'invention a également pour objet un procédé de fabrication de la structure multicouche (complexe) selon l'invention comprenant les étapes suivantes :
- le mélange de la composition A et de la composition B, puis
- l'enduction dudit mélange sur la surface d'une première couche, puis
- le contre-collage de la surface d'une deuxième couche sur ladite surface enduite, puis
- la réticulation dudit mélange.

L'étape de mélange de la composition A et de la composition B peut être réalisée à température ambiante ou à chaud, avant enduction.

De préférence, le mélange est réalisé à une température inférieure à la température de dégradation des ingrédients compris dans l'une ou l'autre des compositions (A) et (B). En particulier, le mélange est réalisé à une température inférieure à 95°C, de préférence allant de 15 à 80°C, de préférence encore allant de 25°C à 50°C, afin d'éviter toute dégradation thermique.

De préférence, on mélange la composition A et la composition B dans des quantités telles que le rapport molaire du nombre de groupes amine primaire sur le nombre de fonctions T présents dans le mélange, noté (r3), va de 0,8 à 1,2, de préférence de 0,9 à 1,1.

Selon un mode de réalisation, lorsqu'un solvant est présent dans les compositions A et/ou B et/ou lorsqu'un solvant est ajouté lors du mélange de la composition A et de la composition B, alors le procédé de complexage comprend une étape d'évaporation du ou des solvants, ladite étape d'évaporation de solvant(s) est alors effectuée avant réticulation du mélange, de préférence avant l'étape de contre-collage.

L'enduction dudit mélange peut être réalisée sur tout ou partie de la surface d'un matériau. En particulier, l'enduction dudit mélange peut être réalisée sous la forme d'une couche d'épaisseur allant de 1,2 à 5 µm. L'enduction est réalisée de préférence de manière continue ou substantiellement continue.

Eventuellement, la réticulation dudit mélange sur la surface du matériau peut-être accélérée en chauffant le(s) matériau(x) enduit(s) à une température inférieure ou égale à 70°C. Le temps requis pour compléter cette réaction de réticulation et assurer ainsi le niveau de cohésion requis est en général de l'ordre de 0,5 à 24 heures.

L'enduction et le contre-collage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

### Utilisation de la structure multicouche

L'invention concerne enfin l'utilisation de la structure multicouche (complexe) selon l'invention pour la fabrication d'emballages flexibles. Les complexes selon l'invention sont en effet utilisables pour la fabrication d'emballages flexibles les plus divers, qui sont mis en forme puis fermés (après l'étape de conditionnement du produit destiné au consommateur) par des techniques de thermoscellage (ou thermosoudage).

En particulier, le complexe selon l'invention peut être utilisé dans l'emballage alimentaire, sans risque de toxicité. Les emballages à destination alimentaire sont généralement traités thermiquement à des températures allant de 60°C à 135°C avant utilisation. En particulier, ils peuvent être pasteurisés (à des températures allant de 90°C à 95°C) ou stérilisés (à des températures allant de 128°C à 135°C).

La structure multicouche selon l'invention présente l'avantage de pouvoir être pasteurisé ou stérilisé.

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y», on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :

### Composition A

- VORANOL® P 400 : polypropylène glycol difonctionnel présentant un indice hydroxyle IOH allant de 250 à 270 mg KOH/g (disponible auprès de la société DOW) ;
- VORANOL® CP 450 : polypropylène glycol trifonctionnel présentant un indice hydroxyle IOH allant de 370 à 396 mg KOH/g (disponible auprès de la société DOW) ;
- REALKYD® XTR 10410 : polyester polyol difonctionnel présentant un indice hydroxyle IOH allant de 108 à 116 mg KOH/g (disponible auprès de la société CRAY VALLEY) ;
- SCURANATE® TX : toluène diisocyanate (TDI) présentant 48,1% en poids de fonctions NCO et comprenant 95% en poids d'isomère 2,4-TDI (disponible auprès de la société VENCOREX) ;
- DESMODUR® N3300 : isocyanurate de hexaméthylène diisocyanate (HDI) (disponible auprès de la société COVESTRO) ;
- 4-hydroxyméthyl-5-méthyl-1,3-dioxolen-2-one synthétisé selon la demande de brevet WO 9,602,253 de MERCK (pureté de 99% en poids) et présentant un indice d'hydroxyle IOH de 431 mg KOH/g.
- acétate d'éthyle : solvant
- BORCH KAT® 315 : catalyseur à base de néodécanoate de bismuth (disponible auprès de la société BORCHERS) ;
- TYZOR PITA® : catalyseur à base d'éthyl-acétoacétate de titane (disponible auprès de la société DORF KETAL) ;
- SILQUEST® A1110: promoteur d'adhésion de type (3-aminopropyl)triméthoxysilane (disponible auprès de la société MOMENTIVE).

Le(s) polyol(s) a(ont) été séché(s) avant d'être mis en réaction avec le(s) polyisocyanate(s) utilisé(s) pour la synthèse du prépolymère de polyuréthane.

### Composition B

- JEFFAMINE® ED 148 (disponible auprès de la société HUNTSMAN) : diamine (de type B1) présentant une masse molaire de 148,20 g/mol et une alcalinité primaire de 13,49 méq/g et répondant à la formule H₂N-CH₂-CH₂-O-CH₂-CH₂-O-CH₂-CH₂-NH₂. JEFFAMINE® ED 148 présente un rapport alcalinité primaire/alcalinité totale de 1,00 déterminé par potentiométrie ;
- LUPASOL® FG (disponible auprès de la société BASF) : polyamine (de type B2) présentant une masse molaire de 800 g/mol et une alcalinité primaire de 9,75 méq/g et répondant à la formule générale (VI): 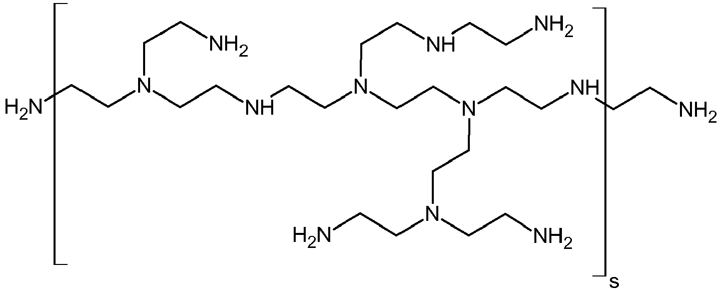 s étant tel que défini précédemment.
- LUPASOL® FG présente un rapport alcalinité primaire/alcalinité totale de 0,42 déterminé par RMN ¹³C.
- H₂N-(CH₂)₁₀-NH₂: diamine (de type B1) présentant une masse molaire de 172 g/mol et une alcalinité primaire de 11,61 méq/g. H₂N-(CH₂)₁₀-NH₂ présente un rapport alcalinité primaire/alcalinité totale de 1,00, déterminé par potentiométrie.

### Exemple 1 : Préparation d'une composition A-1 à base d'un polyuréthane à terminaisons T à base de polyéther polyols et de polyester polyols

On introduit dans un réacteur 190,7 g de SCURANATE® TX et 100 g d'acétate d'éthyle, et on chauffe à 40°C. On introduit ensuite tour à tour 22,7 g de VORANOL® CP 450, puis 103,3 g de VORANOL® P 400 en veillant à ce que la température du mélange ne dépasse pas 80°C. Lorsque la température de mélange est stabilisée, on chauffe le mélange pendant environ 1 heure à 80-85°C puis on refroidit à 70°C. On introduit ensuite 321,6 g de REALKYD® XTR 10410 en veillant à ce que la température du mélange ne dépasse pas 90°C.

Le mélange est maintenu environ 3 heures à 90°C. La fin de la réaction est suivie en contrôlant le pourcentage massique de fonctions NCO dans le milieu, ce dernier devant être en théorie d'environ 5,7 %. Lorsque la réaction est terminée, on refroidit le mélange à 70°C et on introduit 113,9 g de 4-hydrométhyl-5-méthyl-1,3-dioxolen-2-one et 0,5 g de TYZOR PITA®. On ajoute 7,5 g de SILQUEST® A1110 puis le mélange est maintenu à 70°C pendant 6 à 8 heures jusqu'à ce qu'il n'y ait plus de fonction NCO visibles à l'InfraRouge (IR) (disparition de la bande caractéristique de la fonction NCO à environ 2250 cm⁻¹).

Lorsque le pourcentage massique de fonctions NCO est inférieur à 0,1% (plus de bande NCO visible), on introduit 150 g d'acétate d'éthyle. La teneur en fonction T du polyuréthane à terminaisons T est de 0,96 méq/g environ.

### Exemple 2 : Préparation d'une composition A-2 à base d'un polyuréthane à terminaisons T à base de polyéther polyols et de polyester polyols

On introduit dans un réacteur 143,2 g de de SCURANATE® TX, et 100 g d'acétate d'éthyle, et chauffe à 40°C. On introduit lentement 22,6 g de VORANOL® CP 450 et on chauffe le mélange à 50°C. On ajoute ensuite 101,6 g de VORANOL® P 400. La masse réactionnelle monte en exotherme jusqu'à environ 70°C. Une fois l'exotherme maîtrisé, on maintient le mélange à 70°C. Au bout d'une heure de réaction, on introduit 241,4 g de REALKYD® XTR 10410. La masse réactionnelle monte en exotherme jusqu'à environ 85°C. Le mélange est maintenu environ 2-3 heures à 85°C. La fin de la réaction est suivie en contrôlant le pourcentage massique de fonctions NCO dans le milieu, ce dernier devant être en théorie d'environ 4,4% en poids. Lorsque la réaction est terminée, on refroidit le mélange à 70°C et on introduit 76,6 g de DESMODUR® N3300. On homogénéise le mélange pendant 20 minutes puis on ajoute 125,6 g de 4-hydrométhyl-5-méthyl-1,3-dioxolen-2-one. On ajoute 0,45 g de TIZOR PITA®, puis le mélange est maintenu à 80-85°C pendant 3 heures jusqu'à ce qu'il n'y ait plus de fonction NCO visibles à l'IR (disparition de la bande caractéristique de la fonction NCO à environ 2250 cm⁻¹).

Lorsque le pourcentage massique de fonction NCO est inférieur à 0,1% (plus de bande NCO visible), on introduit 200 g d'acétate d'éthyle. La teneur en fonction T du polyuréthane à terminaisons T est de 0,95 méq/g environ.

### Exemple 3 : Préparation des compositions B

Les compositions B qui ont été testées ont été préparées par simple mélange de la diamine B1 (JEFFAMINE® ED 148 ou H₂N-(CH₂)₁₀-NH₂) et/ou de la polyamine B2 (LUPASOL® FG) à une température ambiante (environ 23°C) dans un rapport pondéral B1/B2 indiqué ci-dessous dans le tableau 1.

### Exemple 4 : Préparation des compositions adhésives

Le mélange des compositions A et B détaillées aux exemples 1 à 3 a été effectué dans un ratio massique A/B indiqué ci-dessous dans le tableau 1.

**Tableau 1 : caractéristique des compositions adhésives testées**

| | nature de A | nature de B | ratio massique B1/B2 | ratio massique A/B | ratio molaire NH₂/ T |
|---|---|---|---|---|---|
| Composition 1 | A-1 | JEFFAMINE® ED148+ B2 | 1/1 | 100/7,2 | 0,96 |
| Composition 2 | A-1 | H₂N-(CH₂)₁₀-NH₂+ B2⁽¹⁾ | 1/1 | 100/26,5 | 0,94 |
| Composition 3 | A-2 | JEFFAMINE® ED148 + B2 | 1/1 | 100/8,8 | 0,93 |

| | | | | | |
|---|---|---|---|---|---|
| ⁽¹⁾ : la composition B comprenant le mélange de B1 et de B2 a été diluée à 29% en poids dans un solvant éthanol. | | | | | |

Les compositions 1 à 3 ont été préparées soit à partir de la composition A de l'exemple 1 (A-1) soit à partir de la composition A de l'exemple 2 (A-2).

Le ratio NH₂/T représente le rapport molaire du nombre de fonctions amine primaire sur le nombre de fonctions (T présentes dans la composition adhésive (A+B)).

### Exemple 5 : Préparation des complexes

- Préparation des supports : les couches de matériau sont découpées au format désiré et agrafés sur une fiche Bristol.
- Préparation de la composition adhésive : la composition A et la composition B sont mélangées dans un flacon en verre, avec un éventuel ajout d'acétate d'éthyle. Dans ce dernier cas, l'extrait sec de la composition adhésive est d'environ 30% en poids pour avoir un grammage de l'ordre de 1,2 à 5 g/m² pour chacune des interfaces entre deux substrats.
- Réalisation de la structure multicouche (complexe) :
   ▪ On applique la colle sur une couche aluminium renforcé avec du PolyEthylène Téréphtalate (PET) à l'aide d'un applicateur avec une barre de Mayer,
   ▪ On met des pinces pour maintenir le support sur le Bristol du coté non agrafé et on place le support dans une étuve ventilée 2 minutes à 105°C pour évaporer le solvant,
   ▪ On agrafe ensemble sur un bord le support encollé et le support à contre-coller. On enlève les pinces et contre-colle à l'aide d'un rouleur presseur,
   ▪ On place le complexe sous une presse et le laisse réticuler soit à température ambiante soit dans une étuve ventilée à 40°C sous une presse (plaques métalliques).

Différents complexes ont été préparés en utilisant un système tricouches PET12/ALU9/CPP70 défini ci-après, chaque couche étant séparée par une couche adhésive telle que détaillée dans le tableau 2 ci-dessous :

**Tableau 2 : caractéristique des complexes**

| | Composition adhésive | grammage (g/m²) |
|---|---|---|
| Film 1 | Composition 1 | 4,5 |
| Film 2 | Composition 2 | 3,9 |
| Film 3 | Composition 3 | 4,4 |

PET12/ALU9/CPP70 : système constitué d'une couche de polyéthylène térephtalate de 12 µm d'épaisseur (PET12), d'une couche de polypropylène coulé (« cast polypropylene » en anglais) de 70 µm d'épaisseur (CPP70) et d'une couche mince d'aluminium de 9 µm d'épaisseur (ALU9) positionnée entre les deux couches PET12 et CPP70.

### Exemple 6 : Mesure de la cohésion des complexes de l'exemple 5 avant et après essai de stérilisation et appréciation qualitative de la résistance desdits complexes à la stérilisation

### Pelage à 180° (mesure de la cohésion):

La cohésion du complexe est évaluée par le test de pelage à 180° tel que décrit dans la norme française NF T 54-122 (Octobre 1976). Le principe de ce test consiste en la détermination de la force nécessaire à la séparation (ou pelage) de 2 couches individuelles de complexe liées par l'adhésif.

Une éprouvette de forme rectangulaire de 15 mm de large et d'environ 15 cm de long est découpée dans le complexe bicouche. La découpe des éprouvettes se fait dans le sens machine de l'enduction. On décolle manuellement à partir de l'extrémité de cette éprouvette, et sur environ 2 cm, les 2 couches individuelles de complexe comprises dans cette bande et les 2 extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre DY30- mesure la force supportée par l'éprouvette ainsi maintenue, et mesurée en Newton (N).

Chaque test est répété 3 fois et la valeur moyenne des trois mesures est indiquée dans le tableau 3 ci-dessous.

La mesure de la cohésion avant stérilisation a été effectuée 7 jours après la fabrication du film multicouche (J+7).

Comme illustré dans le tableau 3 ci-dessous, la cohésion a également été mesurée 24 heures après stérilisation.

### Appréciation qualitative de la résistance à la stérilisation :

On a également évalué la qualité de l'adhésion entre les couches de matériau des structures multicouches testées, après stérilisation.

En particulier, on a noté la présence ou non de boursouflures, pouvant être de formes diverses (par exemple des canaux ou cloques) ou bulles. La présence de ces déformations de la structure multicouche traduit l'infiltration d'eau entre les couches de la structure multicouche résultant de la dégradation de l'adhésif au cours de la stérilisation. En outre, on a vérifié si l'adhésif s'est déréticulé au cours de la stérilisation. Pour cela, après avoir réalisé le test de pelage décrit plus haut sur chacun des films testés, on a évalué la présence ou non de tack (pouvoir collant) en exerçant une légère pression de l'index sur la surface de la couche de colle laissée apparente après séparation des couches de matériau.

Les observations ont été consignées dans le tableau 3 ci-dessous.

### Test de stérilisation

Dans le présent exemple, le test de stérilisation a été effectué une fois l'adhésif réticulé au sein du complexe (environ 7 jours après préparation du complexe conformément à l'exemple 5). Des sachets ont été préparés à partir d'un complexe préparé à l'exemple 5, sans sceller le quatrième côté. Les sachets sont placés sur la grille d'un autoclave (phase vapeur) et laissés 1 heure à 130°C dans l'autoclave sous 3 bars.

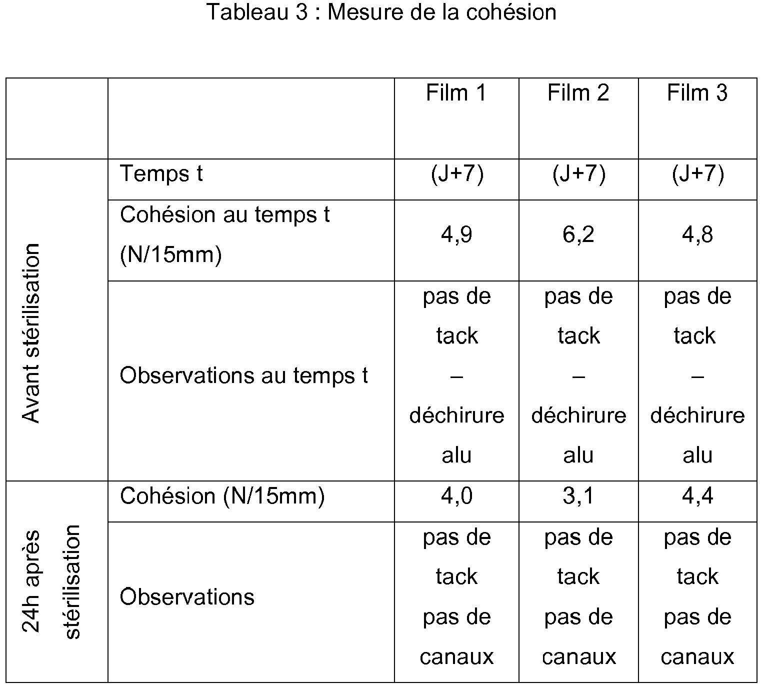

Dans le tableau 3 ci-dessus :
- lorsqu'il est observé « pas de tack », alors le film passe le test de stérilisation,
- lorsqu'il est observé un « tack », alors le film ne passe pas le test de stérilisation,
- lorsqu'il est observé des canaux, alors le film ne passe pas le test de stérilisation.
- lorsqu'il est observé une déchirure, alors le film passe le test de stérilisation.

## Revendications

1. Composition comprenant :
- une composition A comprenant au moins un polyuréthane comprenant au moins deux fonctions terminales T de formule (I) suivante : 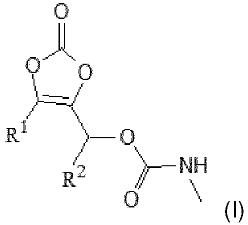
dans laquelle R¹ et R², identiques ou différents, représentent chacun un atome d'hydrogène, un groupe alkyle linéaire ou ramifié de préférence en C1-C6, un groupe cycloalkyle de préférence en C5-C6, un groupe phényle de préférence en C6-C12, ou un groupe alkylphényle avec une chaîne alkyle, linéaire ou ramifiée, de préférence en C1-C4 ; ou R¹ et R² peuvent être liés ensemble pour former un groupement - (CH₂)ₙ- avec n = 3, 4 ou 5,
et
- une composition B comprenant au moins une amine.

2. Composition selon la revendication 1, dans laquelle le polyuréthane comprenant au moins deux fonctions terminales T est obtenu par réaction d'un polyuréthane à terminaisons NCO et d'au moins un composé de formule (II) suivante : 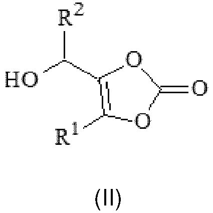 dans laquelle R¹ et R² sont tels que définis dans la revendication 1.

3. Composition selon l'une quelconque des revendications 1 à 2, dans laquelle R¹ est un méthyle et R² est un hydrogène.

4. Composition selon l'une quelconque des revendications 1 à 3, dans laquelle le polyuréthane comprenant au moins deux fonctions terminales T est préparé par un procédé comprenant les étapes suivantes :
E1) la préparation d'un polyuréthane à terminaisons NCO par une réaction de polyaddition :
i) d'au moins un polyisocyanate de préférence choisi parmi les diisocyanates, les triisocyanates, et leurs mélanges ;
ii) avec au moins un polyol de préférence choisi parmi les polyéther polyols, les polycarbonate polyols, les polyester polyols, et leurs mélanges ;
dans des quantités telles que le rapport molaire NCO/OH (r1) est strictement supérieur à 1, de préférence va de 1,6 à 1,9, et préférentiellement de 1,65 à 1,85 ;
et
E2) la réaction du produit formé à l'issue de l'étape E1) avec au moins un composé de formule (II) 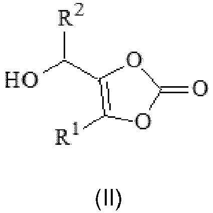
dans laquelle R¹ et R² sont tels que définis dans les revendications 1 ou 3,
dans des quantités telles que le rapport molaire NCO/OH (r2) est inférieur ou égal à 1, de préférence compris entre 0,90 et 1, et préférentiellement compris entre 0,95 et 1.

5. Composition selon la revendication 4, dans laquelle au moins un polyol est choisi par les polyester polyols.

6. Composition selon l'une quelconque des revendications 1 à 5, dans laquelle la composition B comprend :
- au moins une diamine B1 comprenant de préférence deux groupements -CH₂-NH₂, et
- au moins une polyamine B2 comprenant de préférence au moins trois groupements -CH₂-NH₂,
composition B dans laquelle le ratio massique diamine B1:polyamine B2 va de préférence de 30/70 à 70/30.

7. Composition selon la revendication 6, dans laquelle la diamine ou le mélange de diamines B1 présente une alcalinité primaire allant de 3,00 à 20,00 méq/g, de préférence allant de 9,00 à 15,00 méq/g.

8. Composition selon l'une quelconque des revendications 6 ou 7, dans laquelle la polyamine ou le mélange de polyamine B2 présente une alcalinité primaire 8,00 à 21,00 méq/g, de préférence allant de 9,00 à 18,00 méq/g.

9. Composition selon l'une quelconque des revendications 6 à 8, dans laquelle la composition B présente un ratio alcalinité primaire sur alcalinité totale allant de 0,25 à 0,70.

10. Composition selon l'une quelconque des revendications 1 à 9, dans laquelle le rapport molaire du nombre de fonctions amine primaire sur le nombre de fonctions T va de 0,8 à 1,2, de préférence de 0,9 à 1,1.

11. Composition selon l'une quelconque des revendications 1 à 8, **caractérisé en ce qu'**elle est une composition adhésive.

12. Kit prêt à l'emploi comprenant la composition selon l'une des revendications 1 à 11, **caractérisé en ce que** les compositions A et B sont conditionnées dans deux compartiments distincts.

13. Structure multicouches comprenant au moins deux couches de matériau liées entre elles par une couche adhésive, **caractérisé en ce que** ladite couche adhésive est constituée par la composition selon l'une quelconque des revendications 1 à 11, à l'état réticulé.

14. Procédé de fabrication d'une structure multicouche selon la revendications 13, comprenant les étapes suivantes :
- le mélange de la composition A et de la composition B, puis
- l'enduction dudit mélange sur la surface d'une première couche de matériau, puis
- le contrecollage de la surface d'une deuxième couche de matériau sur ladite surface enduite, puis
- la réticulation dudit mélange.

15. Procédé de fabrication selon la revendication 14, dans lequel le mélange de la composition A et de la composition B comprend au moins un solvant et dans lequel le procédé comprend en outre une étape d'évaporation du ou des solvants.

## Patentansprüche

1. Zusammensetzung, umfassend:
- eine Zusammensetzung A, umfassend mindestens ein Polyurethan mit mindestens zwei endständigen Funktionen T der folgenden Formel (I): 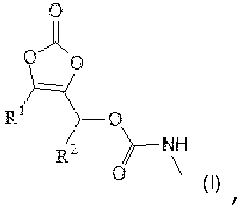
in der R¹ und R², die gleich oder verschieden sind, jeweils für ein Wasserstoffatom, eine lineare oder verzweigte Alkylgruppe, vorzugsweise eine C1-C6-Alkylgruppe, eine Cycloalkylgruppe, vorzugsweise eine C5-C6-Cycloalkylgruppe, eine Phenylgruppe, vorzugsweise eine C6-C12-Phenylgruppe, oder eine Alkenylgruppe mit einer linearen oder verzweigten Alkylkette, vorzugsweise einer C1-C4-Alkylkette, stehen oder R¹ und R² miteinander zu einer Gruppe
- (CH₂)ₙ- mit n = 3, 4 oder 5 verknüpft sein können, und
- eine Zusammensetzung B, die mindestens ein Amin umfasst.

2. Zusammensetzung nach Anspruch 1, wobei das Polyurethan mit mindestens zwei endständigen Funktionen T durch Umsetzung eines Polyurethans mit NCO-Endgruppen und mindestens einer Verbindung der folgenden Formel (II): 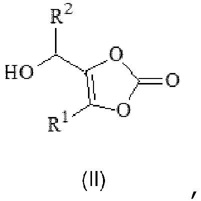 in der R¹ und R² wie in Anspruch 1 definiert sind, erhalten wird.

3. Zusammensetzung nach einem der Ansprüche 1 bis 2, wobei R¹ für Methyl steht und R² für Wasserstoff steht.

4. Zusammensetzung nach einem der Ansprüche 1 bis 3, wobei das Polyurethan mit mindestens zwei endständigen Funktionen T durch ein Verfahren hergestellt wird, das folgende Schritte umfasst:
E1) Herstellung eines Polyurethans mit NCO-Endgruppen durch eine Polyadditionsreaktion:
i) von mindestens einem Polyisocyanat, das vorzugsweise aus Diisocyanaten, Triisocyanaten und Mischungen davon ausgewählt ist;
ii) mit mindestens einem Polyol, das vorzugsweise aus Polyetherpolyolen, Polycarbonatpolyolen, Polyesterpolyolen und Mischungen davon ausgewählt ist;
in solchen Mengen, dass das NCO/OH-Molverhältnis (r1) streng größer als 1 ist, vorzugsweise im Bereich von 1,6 bis 1,9 und bevorzugt von 1,65 bis 1,85 liegt;
und
E2) Umsetzung des am Ende von Schritt E1) gebildeten Produkts mit mindestens einer Verbindung der Formel (II) 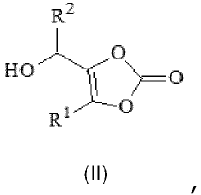
in der R¹ und R² wie in Anspruch 1 oder 3 definiert sind,
in solchen Mengen, dass das NCO/OH-Molverhältnis (r2) kleiner oder gleich 1 ist und vorzugsweise zwischen 0,90 und 1 und bevorzugt zwischen 0,95 und 1 liegt.

5. Zusammensetzung nach Anspruch 4, wobei mindestens ein Polyol aus Polyesterpolyolen ausgewählt wird.

6. Zusammensetzung nach einem der Ansprüche 1 bis 5, wobei die Zusammensetzung B
- mindestens ein Diamin B1, das vorzugsweise zwei
- CH₂-NH₂-Gruppen umfasst, und
- mindestens ein Polyamin B2, das vorzugsweise mindestens drei -CH₂-NH₂-Gruppen umfasst,
umfasst, wobei das Massenverhältnis von Diamin B1 zu Polyamin B2 in Zusammensetzung B vorzugsweise im Bereich von 30/70 bis 70/30 liegt.

7. Zusammensetzung nach Anspruch 6, wobei das Diamin bzw. die Mischung von Diaminen B1 eine primäre Alkalinität im Bereich von 3,00 bis 20,00 meq/g, vorzugsweise im Bereich von 9,00 bis 18,00 meq/g, aufweist.

8. Zusammensetzung nach Anspruch 6 oder 7, wobei das Polyamin bzw. die Mischung von Polyaminen B2 eine primäre Alkalinität im Bereich von 8,00 bis 21,00 meq/g, vorzugsweise im Bereich von 9,00 bis 18,00 meq/g, aufweist.

9. Zusammensetzung nach einem der Ansprüche 6 bis 8, wobei die Zusammensetzung B ein Verhältnis von primärer Alkalinität zu Gesamtalkalinität im Bereich von 0,25 bis 0,70 aufweist.

10. Zusammensetzung nach einem der Ansprüche 1 bis 9, wobei das Molverhältnis der Zahl von primären Aminfunktionen zur Zahl von Funktionen T im Bereich von 0,8 bis 1,2, vorzugsweise von 0,9 bis 1,1, liegt.

11. Zusammensetzung nach einem der Ansprüche 1 bis 8, **dadurch gekennzeichnet, dass** es sich um eine Klebstoffzusammensetzung handelt.

12. Gebrauchsfertiges Kit, umfassend die Zusammensetzung nach einem der Ansprüche 1 bis 11, **dadurch gekennzeichnet, dass** die Zusammensetzungen A und B in zwei separaten Kompartimenten verpackt sind.

13. Mehrschichtstruktur mit mindestens zwei Materialschichten, die durch eine Klebstoffschicht miteinander verbunden sind, **dadurch gekennzeichnet, dass** die Klebstoffschicht aus der Zusammensetzung nach einem der Ansprüche 1 bis 11 in vernetztem Zustand besteht.

14. Verfahren zur Herstellung einer Mehrschichtstruktur nach Anspruch 13, das die folgenden Schritte umfasst:
- Mischen der Zusammensetzung A und der Zusammensetzung B, dann
- Beschichten der Oberfläche einer ersten Materialschicht mit der Mischung, dann
- Auflaminieren der Oberfläche einer zweiten Materialschicht auf die beschichtete Oberfläche, dann
- Vernetzen der Mischung.

15. Herstellungsverfahren nach Anspruch 14, wobei die Mischung der Zusammensetzung A und der Zusammensetzung B mindestens ein Lösungsmittel umfasst und wobei das Verfahren außerdem einen Schritt des Verdampfens des Lösungsmittels bzw. der Lösungsmittel umfasst.

## Claims

1. Composition comprising:
- a composition A comprising at least one polyurethane comprising at least two end functions T of formula (I) below: 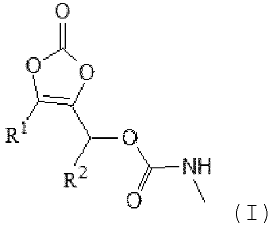
in which R¹ and R², which may be identical or different, each represent a hydrogen atom, a linear or branched alkyl group, preferably a C1-C6 alkyl group, a cycloalkyl group, preferably a C5-C6 cycloalkyl group, a phenyl group, preferably a C6-C12 phenyl group, or an alkylphenyl group with a linear or branched alkyl chain, preferably a C1-C4 alkyl chain; or R¹ and R² may be bonded together to form a group -(CH₂)ₙ- with n = 3, 4 or 5, and
- a composition B comprising at least one amine.

2. Composition according to Claim 1, in which the polyurethane comprising at least two end functions T is obtained by reaction of a polyurethane bearing NCO end groups and of at least one compound of formula (II) below: 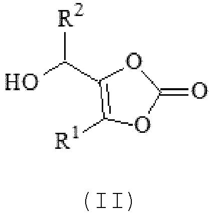 in which R¹ and R² are as defined in Claim 1.

3. Composition according to either of Claims 1 and 2, in which R¹ is a methyl and R² is a hydrogen.

4. Composition according to any one of Claims 1 to 3, in which the polyurethane comprising at least two end functions T is prepared via a process comprising the following steps:
E1) the preparation of a polyurethane bearing NCO end groups via a polyaddition reaction:
i) of at least one polyisocyanate preferably chosen from diisocyanates, triisocyanates, and mixtures thereof;
ii) with at least one polyol, preferably chosen from polyether polyols, polycarbonate polyols, polyester polyols, and mixtures thereof;
in amounts such that the NCO/OH mole ratio (r1) is strictly greater than 1, preferably ranges from 1.6 to 1.9 and preferentially from 1.65 to 1.85; and
E2) the reaction of the product formed on conclusion of step E1) with at least one compound of formula (II) 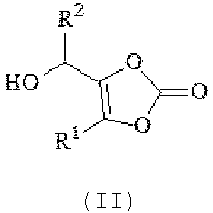
in which R¹ and R² are as defined in Claims 1 or 3,
in amounts such that the NCO/OH mole ratio (r2) is less than or equal to 1, preferably between 0.90 and 1 and preferentially between 0.95 and 1.

5. Composition according to Claim 4, in which at least one polyol is chosen from polyester polyols.

6. Composition according to any one of Claims 1 to 5, in which composition B comprises:
- at least one diamine B1 preferably comprising two -CH₂-NH₂ groups, and
- at least one polyamine B2 preferably comprising at least three -CH₂-NH₂ groups,
composition B in which the diamine B1/polyamine B2 mass ratio preferably ranges from 30/70 to 70/30.

7. Composition according to Claim 6, in which the diamine or the mixture of diamines B1 has a primary alkalinity ranging from 3.00 to 20.00 meq/g, preferably ranging from 9.00 to 15.00 meq/g.

8. Composition according to either of claims 6 and 7, in which the polyamine or the mixture of polyamines B2 has a primary alkalinity 8.00 to 21.00 meq/g, preferably ranging from 9.00 to 18.00 meq/g.

9. Composition according to any one of Claims 6 to 8, in which composition B has a ratio of primary alkalinity to total alkalinity ranging from 0.25 to 0.70.

10. Composition according to any one of Claims 1 to 9, in which the mole ratio of the number of primary amine functions to the number of T functions ranges from 0.8 to 1.2, preferably from 0.9 to 1.1.

11. Composition according to any one of Claims 1 to 8, **characterized in that** it is an adhesive composition.

12. Ready-to-use kit comprising the composition according to one of Claims 1 to 11, **characterized in that** compositions A and B are packaged in two separate compartments.

13. Multilayer structure comprising at least two layers of material bonded together by an adhesive layer, **characterized in that** said adhesive layer consists of the composition according to any one of Claims 1 to 11, in the crosslinked state.

14. Process for manufacturing a multilayer structure according to Claim 13, comprising the following steps:
- mixing composition A and composition B, then
- coating said mixture over the surface of a first layer of material, then
- laminating the surface of a second layer of material over said coated surface, then
- crosslinking said mixture.

15. Manufacturing process according to Claim 14, in which the mixture of composition A and of composition B comprises at least one solvent and in which the process also comprises a step of evaporating the solvent(s).
